# EUROPEAN PATENT APPLICATION

(11) **EP 4 804 066 A1**
(43) Date of publication of application: **09.09.2026**
(21) Application number: 26162144.5
(22) Date of filing: 04.03.2026
(51) Int. Cl.: G06F 21/57, H04L 9/40

(54) **MANAGING SECURITY RISKS ASSOCIATED WITH CLOUD APPLICATION DEPLOYMENTS IN A CLOUD ENVIRONMENT**

(30) Priority: 05.03.2025 US 202519070684
(71) Applicant: Honeywell International Inc., Charlotte, NC 28202 (US)
(72) Inventor: PRUSTY, Abinash, Charlotte, 28202 (US); DATTA, Indranil, Charlotte, 28202 (US)
(74) Representative: Haseltine Lake Kempner LLP

(57) **Abstract**

The present disclosure provides methods and system of managing security risks associated with cloud application deployments in a cloud environment. The present disclosure discloses receiving, by a cloud watcher service from an external database, generic common vulnerabilities and exposures (CVE) information corresponding to each of a plurality of components of a cloud; determining a set of components from the plurality of components of the cloud application which poses a security risk to security of the cloud environment based on the generic CVE information and network deployment information associated with the cloud environment; computing a modified environmental score for each of the set of components based on the corresponding generic CVE information and the network deployment information; and providing a notification corresponding to at least one component from the set of components to an administrator account of the cloud environment whose corresponding modified environmental score is greater than a predefined threshold.

## Description

### TECHNICAL FIELD OF THE INVENTION

The present subject matter relates to the field of cloud solution/application deployments, and in particular, to managing security risks associated with cloud application deployments in a cloud environment.

### BACKGROUND OF THE INVENTION

Cloud computing technology enables applications and solutions to be deployed in a cloud environment that provides for software-as-a-service (SaaS), platform-as-a-service (PaaS), infrastructure-as-a-service (IaaS), etc. Nowadays, entities such as businesses, enterprises, and even banks are highly dependent on the cloud-based applications and solutions for their day-to-day smooth functioning which is critical to their revenue generation. This continued expansion of cloud-based applications and solutions has been attracting cyber criminals/ attackers rendering the applications and solutions deployed in a cloud environment vulnerable.

Currently in cloud deployments, it has been observed that it is not known whether the binaries (i.e., components of applications and solutions) deployed in the cloud environment are exploitable. The specific actions that end users can take immediately to prevent such exploits are also currently unknown. This issue raises potential threats to cloud deployments and the existing cloud security mechanisms fail to address said issues due to which the end users may get impacted suddenly and general business may get paralyzed causing business continuity issues and loss of revenues to the service/software provider along with other exploitations by attacker(s).

Thus, there exists a technical challenge to provide a solution to address the shortcomings related to the existing techniques cyber threat resilience.

### SUMMARY OF THE INVENTION

The present subject matter discloses methods and system of managing security risks associated with cloud application deployments in a cloud environment.

In an embodiment, a method of managing security risks associated with cloud application deployments in a cloud environment is disclosed. The method includes receiving, by a cloud watcher service from an external database, generic common vulnerabilities and exposures (CVE) information corresponding to each of a plurality of components of a cloud. Further, the method includes determining a set of components from the plurality of components of the cloud application which poses a security risk to security of the cloud environment based on the received generic CVE information and network deployment information associated with the cloud environment. Further, the method includes computing a modified environmental score for each of the set of components based on the corresponding generic CVE information and network deployment information associated with the cloud environment. The method further includes providing a notification corresponding to at least one component from the set of components to an administrator account of the cloud environment whose corresponding modified environmental score is greater than a predefined threshold.

In some embodiments, the determining further includes for each of the plurality of components of the cloud application: obtaining vector information associated with the component from the generic CVE information associated with the component. Further, the method includes determining whether the component can impact the security of the cloud environment based on the vector information and the network deployment configuration. Further, the method includes classifying the component in the set of components when it is determined that the component can impact the security of the cloud environment. Further, the method includes discarding the component when it is determined that the component cannot impact the security of the cloud environment.

In some embodiments, the computing further includes for each of the components in the set of components: obtaining vector information associated with the component from the generic CVE information associated with the component. Further, the method includes updating one or more metric values in the vector information associated with the component based on the network deployment information. Further, the method includes calculating the modified environmental score for the component based on the updated one or more metric values.

In some embodiments, the method further includes ascertaining, a security risk category for each of the component in the set of components based on the corresponding modified environmental score and predetermined rules. The security risk category is one of a low-risk category, a medium risk category, and a high-risk category.

In some embodiments, the method further includes providing an input associated with the at least one component to an AI model when the corresponding category of the at least one component is the medium risk category or the high-risk category. The input comprises at least an identifier of the generic CVE information associated with the at least one component. Further, the method includes receiving a response from the AI model, wherein the response comprises at least a recommendation action for mitigating the security risk associated with the component. Further, the method includes providing a recommendation message in the notification to the administrator account, wherein the recommendation message comprises information about the recommendation action for mitigating the security risk associated with the at least one component.

In some embodiments, the method further includes discarding the component when the corresponding category of the component is ascertained to be low risk category.

In some embodiments, the method further includes obtaining binary scan information associated with the cloud application from a storage, wherein the binary scan information comprises information about the plurality of components of the cloud application. The method further includes transmitting, by the cloud watcher service, a request to the external database for providing the generic CVE information associated with the plurality of components of the cloud application, wherein the external database comprises the generic CVE information corresponding to the plurality of components of the cloud application.

In an embodiment, a system for managing security risks associated with cloud application deployments in a cloud environment is provided. The system comprises processor configured to receive generic CVE information corresponding to each of a plurality of components of a cloud from an external database. The processor is further configured to determine a set of components from the plurality of components of the cloud application which poses a security risk to security of the cloud environment based on the received generic CVE information and network deployment information associated with the cloud environment. Further, the processor is configured to compute a modified environmental score for each of the set of components based on the corresponding generic CVE information and network deployment information associated with the cloud environment. The processor is also configured to provide a notification corresponding to at least one component from the set of components to an administrator account of the cloud environment whose corresponding modified environmental score is greater than a predefined threshold.

In yet another embodiment, a computer-readable medium having computer-executable instructions stored thereon is disclosed. The computer-executable instructions, when executed by a processor, cause the processor to receive generic CVE information corresponding to each of a plurality of components of a cloud from an external database. Further, the computer-executable instructions further cause the processor to determine a set of components from the plurality of components of the cloud application which poses a security risk to security of the cloud environment based on the received generic CVE information and network deployment information associated with the cloud environment. Furthermore, the computer-executable instructions cause the processor to compute a modified environmental score for each of the set of components based on the corresponding generic CVE information and network deployment information associated with the cloud environment. Furthermore, the computer-executable instructions cause the processor to provide a notification corresponding to at least one component from the set of components to an administrator account of the cloud environment whose corresponding modified environmental score is greater than a predefined threshold.

The systems and methods described above provide an efficient solution to that at runtime, users will be notified for any quick action to be taken to avoid immediate cyber-attack. Further, the users will be felt secure for their cloud application. Also, the users may be able to perform prevention actions to protect themselves from immediate vulnerabilities. Further, the users may save potential financial loss and reduce operational cost.

This summary is provided to describe select concepts in a simplified form that are further described in the detailed description. This summary is not intended to identify key or essential features of the claimed subject matter, nor is it intended to be used as an aid in determining the scope of the claimed subject matter.

Implementations of the current subject matter can include, but are not limited to, methods consistent with the descriptions provided herein as well as articles that comprise a tangibly embodied machine-readable medium operable to cause one or more machines (e.g., computers, etc.) to result in operations implementing one or more of the described features. Similarly, computer systems are also described that may include one or more processors and one or more memories coupled to the one or more processors. A memory, which can include a non-transitory computer-readable or machine-readable storage medium, may include, encode, store, or the like one or more programs that cause one or more processors to perform one or more of the operations described herein. Computer implemented methods consistent with one or more implementations of the current subject matter can be implemented by one or more data processors residing in a single computing system or multiple computing systems. Such multiple computing systems can be connected and can exchange data and/or commands or other instructions or the like via one or more connections, including, for example, to a connection over a network (e.g. the Internet, a wireless wide area network, a local area network, a wide area network, a wired network, or the like), via a direct connection between one or more of the multiple computing systems, etc.

The details of one or more variations of the subject matter described herein are set forth in the accompanying drawings and the description below. Other features and advantages of the subject matter described herein will be apparent from the description and drawings, and from the claims. While certain features of the currently disclosed subject matter are described for illustrative purposes in relation to web application user interfaces, it should be readily understood that such features are not intended to be limiting. The claims that follow this disclosure are intended to define the scope of the protected subject matter.

### BRIEF DESCRIPTION OF DRAWINGS

Embodiments of the subject matter will hereinafter be described in conjunction with the following drawing figures, wherein like numerals denote like elements, and:
FIG. 1 is a schematic diagram of an illustrative environment of managing security risks associated with cloud application deployments in a cloud environment, according to one or more embodiments of the present disclosure;
FIG. 2 is a schematic block diagram of a cloud watcher service system implementing a technique of managing security risks associated with cloud application deployments in a cloud environment, according to one or more embodiments of the present disclosure;
FIG. 3 is a schematic diagram depicting an example use case of managing security risks associated with cloud application deployments in a cloud environment, according to one or more embodiments of the present disclosure;
FIG. 4 illustrates a flowchart of a method of managing security risks associated with cloud application deployments in a cloud environment, according to one or more embodiments of the present disclosure;
FIG. 5 illustrates a flowchart of a method of providing a notification based on a modified environmental score, according to one or more embodiments of the present disclosure;
FIG. 6 illustrates a flowchart of a method of generating a recommendation message based on an Artificial Intelligence (AI) model, according to one or more embodiments of the present disclosure; and
FIG. 7 illustrates a flowchart of a method of fetching generic CVE information associated with a plurality of components of a cloud application, according to one or more embodiments of the present disclosure.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having benefit of the description herein.

### DETAILED DESCRIPTION OF INVENTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

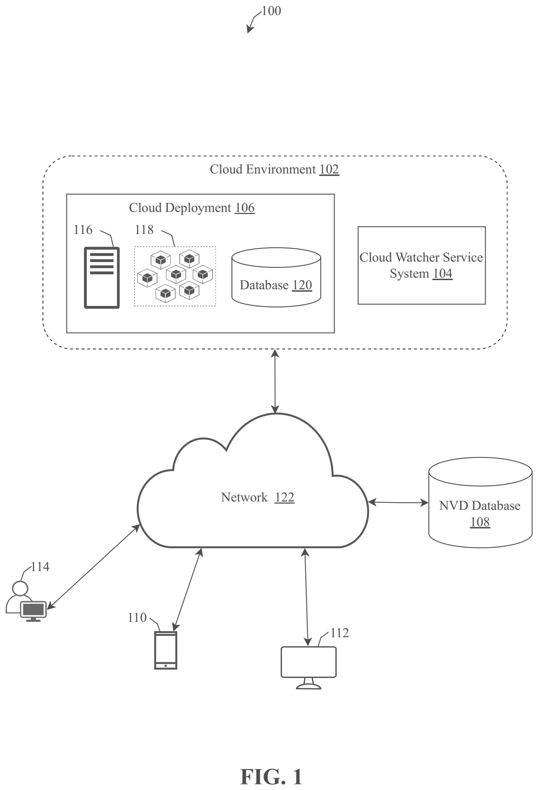

**FIG. 1** illustrates an environment 100 implementing a cloud watcher service system 104 for managing security risks associated with cloud application deployments in a cloud environment 102, according to one or more embodiments of the present disclosure. As illustrated, the environment 100 may include the cloud watcher service system 102 implemented in the cloud environment 102, a cloud deployment 106, an NVD database 108108, a user equipment (UE) client 110, a desktop client 112, and a service provider 114.

The cloud deployment 106 may be understood as a collective reference to cloud infrastructure supporting cloud services. The cloud deployment 106 may include, but is not limited to, an application server 116, a plurality of software applications 118, and a database 120 (hereinafter referred to as 'the cloud database 120'). In a non-limiting example, the application server 116 may be implemented as a combination of hardware and software that provides an environment for running and managing applications, such as the software applications 118. In some examples, the at least one application server 116 may serve as a middleware, enabling communication and integration between various components of an application (such as web servers, databases, and business logic) of the plurality of software applications 118. The at least one application server 116 may act as an intermediary between end users/clients and backend systems or databases such as the cloud database 120. In an example, the application server 116 may host, manage, and deliver applications to clients (i.e., the UE client 110, the desktop client 112 and the service provider 114) over a network.

The cloud watcher service system 104 may be configured to provide cloud watcher service for managing security risks associated with cloud deployment 106 according to the aspects of the present disclosure. In some embodiments, the cloud watcher service system 104 may be communicatively connected to an external database i.e., the NVD database 108. In an example, the NVD database 108 may be a standard vulnerability database such as the standard vulnerability database maintained by the National Institute of Standards and Technology (NIST) of the USA government. The NVD database 108 is the U.S. government repository of standards based vulnerability management data represented using the Security Content Automation Protocol (SCAP). The NVD database 108 contains generic common vulnerabilities and exposures (CVE) information of each of components associated with the software applications 118 deployed in the cloud environment 102. This data enables automation of vulnerability management, security measurement, and compliance. The NVD database 108 includes databases of security checklist references, security-related software flaws, product names, and impact metrics. Although the present disclosure has mentioned the NVD database 108 maintained by the NIST, a person skilled in the art would appreciate that there may be any other external database storing similar information as described for the NVD database 108. Therefore, the present disclosure must not be seen as being limited to accessing only the NVD database 108. In some embodiments, thus, the cloud watcher service system 104 may obtain generic common vulnerabilities and exposures (CVE) information pertaining to application components related to the software applications 118 deployed in the cloud deployment 106.

As mentioned above, the cloud watcher service system 104 may be configured for managing security risks associated with the software applications 118 running in the cloud deployment 106. In some embodiments, the cloud watcher service system 104 may transmit one or more information/notification/recommendations to the UE client 110 and/or the desktop client 112 and/or the service provider 114.

In an aspect, the UE client 110 and/or the desktop client 112 may be understood as the devices being operated by the end users. For example, the UE client 110 may be a smartphone, a tablet computer, palm top device or any other portable computing device. Further, the desktop client 112 may be understood as a desktop computer, mainframe computer, etc. Further, the service provider 114 may be understood as a team or organization responsible to develop, implement and maintain one or more software application components (i.e., binaries) pertaining to each of the plurality of software applications 118 deployed in the cloud environment 102. In an aspect, the UE client 110 and the desktop client 112 are the subscribers of the software solutions being provided by the service provider 114, like a consumer and an enterprise.

In some embodiments, the cloud watcher service system 104 may be communicatively connected with the cloud deployment 106. Further, the cloud watcher service system 104 may be connected to the NVD database 108, the UE client 110, the desktop client 112 and the service provider 114 via a network 122. The network 122 may be understood as one or more networks selected from an optical network, a cellular network, the Internet, a Local Area Network ("LAN"), a Wide Area Network ("WAN"), a satellite network, a 3rd party 'cloud' environment, a fiber network, a cable network, and combinations thereof. the UE client 110the desktop client 112the service provider 114the UE client 110the desktop client 112

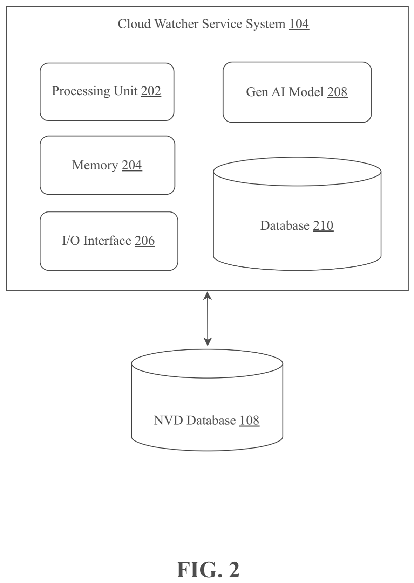

**FIG. 2** is a schematic block diagram of the cloud watcher service system 104 (hereinafter referred to as 'the system 104') implementing a technique of managing security risks associated with cloud application deployments in the cloud environment 102, according to one or more embodiments of the present disclosure. The system 104 may include, but is not limited to, a processing unit 202, memory 204, I/O interface 206, a Gen AI model 208, and a database 210 (hereinafter referred to as 'the internal database 210').

In an aspect, the memory 204, inter alia, may comprise one or more set of executable logics and/or codes. In an alternate non-limiting embodiment, the Gen AI model 208 may be configured within the memory 204 and the processing unit 202 may implement the operations of the Gen AI model 208.

In a non-limiting embodiment, the processing unit 202, the memory 204 and the IO Interface 206 may be communicatively and operatively coupled with each other. In some non-limiting examples, the processing unit 202 may be implemented or realized as a general purpose processor or a group of general purpose processors, a content addressable memory, a digital signal processor, an application specific integrated circuit (ASIC), a field programmable gate array, any suitable programmable logic device, discrete gate or transistor logic, discrete hardware components, or any combination designed to perform the functions described here. In some examples, the processing unit 202 may be realized as microprocessors, controllers, microcontrollers, or state machines. In some examples, the processing unit 202 may be realized as a combination of computing devices, such as, a combination of digital signal processors and microprocessors, a plurality of microprocessors, one or more microprocessors in conjunction with a digital signal processor core, or any other such combination/configuration. Furthermore, alternative software implementations including, but not limited to, distributed processing, parallel processing, or virtual machine processing can also be configured to perform the methods described herein.

In some non-limiting examples, the memory 204 may be disk drives, optical storage devices, solid-state storage devices such as a random-access memory ("RAM") and/or a read-only memory ("ROM"), which can be programmable, flash-updateable and/or the like. The at least one input/output (I/O) interface 206 provides input/output operations for the system 104. In one implementation, the I/O interface 206 may be communicatively coupled with input/output devices such as transmitter(s), receiver(s), keyboard(s), pointing device(s), display device(s), etc., to transmit and/or receive signals and/or data to/from external devices.

In some embodiments, the Gen AI model 208 may be a deep learning model trained based on unsupervised and/or semi-supervised machine learning algorithms. In some non-limiting examples, the Gen AI model 208 may be based on any state-of-the-art generative AI models, for example, Generative Adversarial Networks, or GANs. In some non-limiting implementations, the Generative adversarial Networks (GANs) may be used for generative modelling using deep learning methods such as CNN (Convolutional Neural Network). GANs may be generally understood as a type of deep learning algorithm that utilizes generative and discriminative models in combination to generate new data that is like an existing dataset. The fundamental structure of the GANs is comprised of two neural networks: a generator and an authenticator. The generator model is responsible for creating new data, while the authenticator model may be tasked with evaluating the authenticity of the generated data. The objective of the generator is to minimize the loss function by generating a greater number of samples that the authenticator classifies as genuine. Further the authenticator model aims to maximize the loss function by accurately identifying as many true data samples as possible and as many generated samples as false.

In another non-limiting example, the Gen AI model 208 may be based on Generative Pre-training Transformer (GPT) which is a type of Transformer-based neural network language model that is trained using a large dataset of text. The GPT language models can translate and use information gathered on the Internet to create textual content. In yet another non-limiting example, the Gen AI model 208 may be based on Variational Autoencoders (VAEs) technique which are used in tasks like image generation and anomaly detection. An example of the Gen AI model 208 may be the well-know GPT-4. The Gen AI model 208 may utilize text(s) as input and use GPT-4 model to generate an output to get one or more recommendations, and a context aware response based on the one or more recommendations will be sent to UE Client 104-1 and/or the desktop client 112 and/or the service provider 114.

In some embodiments, the internal database 210 may be configured to store one or more input/output information received/transmitted by the system 104. Further, the internal database 210 may store one or more recommendations generated by the Gen AI model 208. Furthermore, the internal database 210 may store the generic CVE information received from the NVD database 108, one or more modified environmental score for each of the plurality of components deployed in the cloud environment 102. The internal database 210 may also store architecture details of the software application component deployed in the cloud.

In some embodiments, the system 104 may continuously monitor the deployed software application components of the cloud i.e., the cloud deployment 106. Now, the system 104 (by the processing unit 202) may detect new CVE in the deployed component of the software applications 118 in the Cloud deployment 106. The processing unit 202 may also capture deployment configuration of the newly deployed components of the plurality of software applications 118 in the cloud deployment 106. In an example, the deployment configuration may include data associated with planning, installing, and configuring network infrastructure which may include details of the hardware set-up, software set-up, and services installed for the functioning of the component in the cloud environment 102 forming a part of the cloud deployment 106. Since, the NVD database 108 contains generic CVE information of the software application components of the cloud deployment 106, the processing unit 202 may receive the generic CVE information corresponding to each of a plurality of components of the cloud deployment 106. The NVD database 108 may contain the latest CVE information for the deployed software application components at runtime. In some embodiments, the deployed software application component's vulnerability may be found out by getting binary scan information before the software application components are deployed in the cloud environment 102. This may be a base CVE score for the deployed software application components for the cloud-based application (i.e., software product) being deployed in the cloud deployment 106.

Further, the processing unit 202 may access the information such as application deployment structure, networking details and interface details of the deployed software application component(s) in the internal database 210. The application deployment structure may be understood as information relating to cloud resources, such as servers, routers, switches, etc. where the application has footprints e.g., IPs, locations, name, path of Virtual machines (VMs), Databases, services. Further, the networking details may be understood as details regarding how the individual cloud resources interact with each other and from the users (i.e., UE client 104-1 and/or the desktop 104-2) e.g., HTTPs, TLS at rest and transit. The Interface details may be understood as the signed binary details like size of the binary, deployment timestamps. These details stored in the internal database 210 may be later utilized by the processing unit 202 to compute a modified environmental score for each of the components of the plurality of components i.e., cloud deployment 106.

In some embodiments, the processing unit 202 may obtain binary scan information associated with the cloud application from the internal database 210. In an aspect, the binary scan information may comprise information about the plurality of components of the cloud application. Further, the processing unit 202 may transmit a request to the external database i.e., the NVD database 108 for providing the generic CVE information associated with the plurality of components of the cloud application. The NVD database 108 may may contain the generic CVE information corresponding to a plurality of components of a plurality of components in the cloud deployment 106.

Once the generic CVE information is received from the NVD database 108, the processing unit 202 may determine a security risk to security of the cloud environment 102 based on the received generic CVE information and network deployment information associated with the cloud environment. In an aspect, when the processing unit 202 identifies a new CVE for a component of the cloud deployment 106, it may analyse the severity or impact i.e., the security risk attached with the new CVE by considering current context of the deployed environment i.e., the cloud deployment 106.

In some embodiments, for each of the plurality of components of the cloud application, the processing unit 202 may obtain vector information associated with the component from the generic CVE information associated with the component. In a non-limiting aspect, the vector information may be understood as data that may pose security risk for the component of a cloud information. A non-limiting example of attack vectors may include: 'Compromised Credentials' - username and password are most common type of access credentials for any cloud deployed application. These access credentials may get exposed to unauthorized entities causing compromised credentials. This often occurs when a user falls prey to phishing attempts by attackers. When the access credentials are exposed i.e., stolen or lost, it may provide intruders or attackers an access to the cloud application. The security risk posed by compromised credentials may vary with the access level they provide. For example, if an attacker gets access credentials of a privileged user such as an administrator, etc., the risk is higher compared to the risk posed by exposure of access credentials of customers or other non-privileged users. Also, in case an attacker/intruder gets machine-to-machine credentials, it may provide them an unrestricted access throughout an enterprise.

Another non-limiting example of the attack vectors may include 'Missing or Poor Encryption' - this attack vector may pose risk of data theft by adversaries or cyber criminals who may get access of the sensitive information including credentials, being transmitted in unencrypted or poorly encrypted (using weak cryptographic ciphers or protocols) text form. This may imply that a competitor or attacker intercepting data storage, communication, or processing may access sensitive data using brute-force approaches to break weak encryption. Yet another non-limiting example of attack vectors may include 'Misconfiguration' - this may occur when there is a system configuration error. For example, if set-up pages are enabled or a user uses default usernames and passwords. If the setup/app server configurations are not disabled, the attacker may exploit the bugs or flaws, which may allow the attackers to manipulate the configuration and gain entry to systems/applications. Misconfigured systems and applications (apps) provide an easy entry point for attackers/intruders to exploit the systems and applications (apps).

Few other non-limiting examples of attack vectors may include "Denial-of-service (DoS) and distributed denial-of-service (DDoS) attacks". The DoS and DDoS are designed to flood one or more components of the cloud deployment 106 with spam requests to the point where the under-attack component becomes overloaded and becomes dysfunctional to cater to legitimate service requests. The target of DoS and DDoS attacks is to engage the resources of the systems of the OT network into illegitimate request so that the expected functions/access are denied to authorized users/operators. These attacks are very common and may be initiated by unethical competitors as well as random cyber criminals. 'Phishing attacks', in this type of attack vector a cybercriminal may send an email or message to legitimate users of the one cloud deployment 106. These emails or messages usually seem to have been received from legitimate or trusted senders/sources and are targeted for gathering confidential or sensitive information. Yet another type of cyber-attack may be "Ransomware" which may hold the one or more components of the cloud deployment 106 hostage till the victim agrees to pay a ransom to the attacker. Usually, the attackers send instructions to regain control of the victim components only after payment of ransom amount. These vector attack examples are only for ease of understanding and the same must not be seen as limitation.

Further, the processing unit 202 may determine whether the component may impact the security of the cloud environment 102 based on the vector information and the network deployment configuration. In case, the processing unit 202 determines that the component may impact the security of the cloud environment 102 based on the vector information and the network deployment configuration, the processing unit 202 may classify said component in the set of components i.e., the processing module 108-1 may add/ classify the said component in the set of components when it is determined that the component can impact the security of the cloud environment 102. In case, the processing unit 202 determines that the component cannot impact the security of the cloud environment 102, it may discard the component i.e., the processing unit 202 may not add/classify that component in the set of components. In other words, the set of components may comprise only those components which may impact the security of the cloud environment 102.

In some embodiments, the processing unit 202 may compute a modified environmental score for each of the components in the set of components based on the corresponding generic CVE information and network deployment information associated with the cloud environment 102. In an aspect, for computing the modified environmental score for each of the components in the set of components, the processing unit 202 may obtain vector information associated with the component from the generic CVE information associated with the component. In an example, the NVD database 108 may contain the vector information for each of components deployed in the cloud environment 102, based on the risk profile of the component. These vector information along with other information may provide one or more type of vector attacks (few examples of the attack vectors have been explained in the above paragraphs) to which the component may be vulnerable which may lead to an impact to the cloud environment 102.

Further, the processing unit 202 may update one or more metric values in the vector information associated with the component based on the network deployment information. The processing unit 202 may calculate the modified environmental score for the component based on the updated one or more metric values. In an aspect, the processing unit 202 may ascertain a security risk category for each of the component in the set of components based on the corresponding modified environmental score and predetermined rules. The security risk category may be one of: a low-risk category, a medium risk category, and a high-risk category.

In some embodiments, the network deployment information may include data associated with planning, installing, and configuring network infrastructure which may include details of the hardware set-up, software set-up, and services installed for the functioning of the component(s) of the software applications 118 in the cloud deployment 106 forming a part of the cloud environment 102. The one or more metric values are based on the risk profile associated with each of the deployed infrastructure. For example, if a component is communicating via an unsecure communication channel, this is a security risk and the same may be captured as a metrics and updated into the vector information. Similarly, the processing unit 202 may generated the one or more metric values for each of the attributes of the network deployment and may update these one or more metric values in the vector information which was received from the external database i.e., NVD database 108. In some implementations, the one or more metric values may be numerical values indicating risk associated with one or more attributes of the network infrastructure deployed in the cloud environment 102.

In some embodiments, once the one or more metric values are updated in the vector information associated with the component based on the network deployment information, the processing unit 202 may calculate the modified environmental score for each of the component of the set of the components. Further, the processing unit 202 may ascertain or determine the security risk category for each of the component of the set of the components based on the calculated modified environmental score and predetermined rules. In an aspect, the predetermined rules may be decided by the developers of the cloud watcher service system 104 and may be customized/updated depending on evolving domain knowledge and experience of the team.

Now, the processing unit 202 may consider the modified environmental score and predetermined rules to ascertain a security risk category for each of the components of the set of components. The security risk category may be one of: a low-risk category, a medium risk category, and a high-risk category. In a non-limiting example, the processing unit 202 may ascertain a component as belonging to a low security risk category if the modified environmental score is between 0 and 4 (out of 10). The processing unit 202 may ascertain a component as belonging to a medium security risk category if the modified environmental score is between 4 and 7 (out of 10). Further, the processing unit 202 may ascertain a component as belonging to a high security risk category if the modified environmental score is between 7 and 10 (out of 10).

In some embodiments, the processing unit 202 may discard the component when the corresponding category of the component is ascertained to be a low risk category. In a non-limiting example, if the component has a score of 3.5 (out of 10), then the processing unit 202 may determine that the components is a low risk category and may discard the component from further processing. For a low risk category component, the processing module need not perform any other process and may tag the component as a low risk category so that the user and/or the service provider 114 is aware of its security risk category.

In some embodiments, a predefined threshold value may be preconfigured in the system 104 which may indicate that the components having the modified environmental score below the predefined threshold value may be ascertained as a low security risk category. Further, the components having the modified environmental score above the predefined threshold value may be ascertained as a medium or a high security risk category. In the above non-limiting example, the modified environment score of '4' may be preconfigured as the predefined threshold value. However, the system 104 may be further configured to determine the components belonging to the medium and the high security risk category, as explained in the above example.

A non-limiting example of the processing unit 202 ascertaining that a component of the set of components belong to a low risk category may be understood by a table as mentioned below as Table 1:

**Table 1**

| Scenario 1: Low Risk Category |
|---|
| Background: |
| Let's assume protobuf-java version 2.5.0 OpenSource Component is used in an application which is deployed in the cloud deployment 106. |
| Component Name: *protobuf-java version 2.5.0* |
| Identifier: *"CVE-2022-3171"* [Let's assume that it is identified recently by the binary scan and the Cloud Watcher Service System 104 is now analyzing this CVE] |
| |
| Step 1: The Cloud Watcher Service System 104 obtains generic CVE information of the *CVE-2022-3171* from the NVD database 108. |
| Step 2: The Cloud Watcher Service System 104 filtered out following CVE details: |
| *Base Score: 7.5 HIGH* |
| *Vector: CVSS:3.1*/*AV:N*/*AC:L*/*PR:N*/*UI:N*/*S:U*/*C:N*/*I:N*/*A:H* |
| *Where AV: Attack Vector, AC: Attack Complexity, PR: Privilege Required, UI: User Interaction, C: Confidentiality, I: Integrity, A: Availability, N: Network, L: Low, N:None, U: Unchanged, H: High* |
| *Description: A parsing issue with binary data in protobuf-java core and lite versions prior to 3.21.7, 3.20.3, 3.19.6 and 3.16.3 can lead to a denial of service attack. Inputs containing multiple instances of non-repeated embedded messages with repeated or unknown fields causes objects to be converted back-n-forth between mutable and immutable forms, resulting in potentially long garbage collection pauses. We recommend updating to the versions mentioned above.* |
| Step 3: The Cloud Watcher Service System 104 calculates the modified environmental score of the *CVE-2022-3171* and the results are as below: |
| *Modified Attack Vector (MAV) is Physical as this application does not take any input from users through the web page deployed.* |
| *Modified Attack Complexity (MAC) is High as no direct access to Cloud Infrastructure except Cloud Admin.* |
| *Modified Privileges Required (MPR) is High as credentials are must to get access to the cloud resources.* |
| The above conclusions and calculations are done in the Cloud Watcher Service System 104 and outcome is Modified environmental (CVSS) Score 3.8 (which is LOW considering '4' as the threshold value). This means that the component *"protobuf-java version 2.5.0"* is a low risk category. |
| In this case, Cloud Watcher Service System 104 does not contact Gen AI model 208 to get recommendation nor send any notification to either Users (the UE client 110 and/or the |
| desktop client 112) /Product Owners (the service provider 114) considering the impact is low. |

Further, a non-limiting example of the processing unit 202 ascertaining that a component of the set of components belong to a medium risk category may be understood by a table as mentioned below as Table 2:

**Table 2**

| | | Scenario 2: Medium Risk Category |
|---|---|---|
| | | Background: |
| | | Let's assume Network Time Protocol project (NTP) version 4.2.8p13 OpenSource Component is used in an application which is deployed in the cloud deployment 106. |
| | | Component Name: *Network Time Protocol project (NTP) version 4.2.8p13* |
| | | Identifier: *"CVE-2020-11868" -* [Let's assume that it is identified recently by the binary scan and the cloud watcher service system 104 is now analyzing this CVE] |
| | | Step 1: The Cloud Watcher Service System 104 obtains generic CVE information of the *CVE-2020-11868* from the NVD database 108. |
| | | Step 2: The Cloud Watcher Service System 104 filtered out following CVE details: |
| | | *Base Score: 7.5 HIGH* |
| | | *Vector: CVSS:3.1*/*AV^{:}N*/*AC:L*/*PR:N*/*UI:N*/*S:U*/*C:N*/*I:N*/*A:H* |
| | | *Where:* |
| | | *A V: Attack Vector,* |
| | | *AC: Attack Complexity,* |
| | | *PR: Privilege Required,* |
| | | *UI: User Interaction,* |
| | | *C: Confidentiality,* |
| | | *I: Integrity,* |
| | | *A: Availability,* |
| | | *N: Network,* |
| | | *L: Low, N:None, U: Unchanged, H: High* |
| | | *Description: ntpd in ntp before 4.2.8p14 and 4.3.x before 4.3.100 allows an off-path attacker to block unauthenticated synchronization via a server mode packet with a spoofed source IP address, because transmissions are rescheduled even when a packet lacks a valid origin timestamp.* |
| | | Step 3: The Cloud Watcher Service System 104 calculates the modified environmental score of the *CVE-2020-11868* and the results are as below: |
| | | *Modified Attack Complexity (MAC) is High as no user can have direct access to Cloud Infrastructure except Cloud Admin.* |
| | | *Modified Privileges Required (MPR) is High as credentials are must to get access to the cloud resources.* |
| | | *In this case Attack Vector is Network (Unchanged)* |
| | | The above conclusions and calculations are performed by the cloud watcher service system 104 and outcome is Modified environmental (CVSS) Score 4.4 which is MEDIUM (considering '4' as the threshold value). This means that the component "Network Time Protocol project (NTP) version 4.2.8p13" is a medium risk category. |
| | | Step 4: In this case, Cloud Watcher Service System 104 may send the following query to Gen AI model 208 to get recommendation and will send notifications to Users (the UE client 110 and/or the desktop client 112) /Product Owners (the service provider 114) considering the impact is medium. |
| | | Assume that following query was created by the processing unit 202 of the Cloud Watcher Service System 104: |
| | | *"There is an open source component Network Time Protocol project (NTP) version 4.2.8p13 and a vulnerability CVE-2020-11868 which has a environmental cvss score of 4.4 [CVSS:3.0*/*AV:N*/*AC:L*/*PR:N*/*UI:N*/*S:U*/*C:N*/*I:N*/*A:H*/*MAV:N*/*MAC:H*/*MPR:H*/*MUI:N*/*MS: U*/*MC:N*/*MI:N*/*MA:H]. As a user what precaution I can take?"* |
| Response received from Gen. AI Model 208 is as follows: | | |
| *"To mitigate the vulnerability CVE-2020-11868 in the Network Time Protocol (NTP) version 4.2.8p13, you can take several precautions as a user:* | | |
| | ***1. Update to the Latest Version:** The most effective way to address this vulnerability is to update NTP to the latest version available. This ensures that any security patches and fixes are applied, reducing the risk of exploitation.* | |
| | ***2. Restrict Network Access:** Limit the network access to the NTP service. This can be done by configuring firewall rules to restrict access to trusted IP addresses only. This reduces the attack surface and prevents unauthorized access.* | |
| | ***3. Monitor Network Traffic:** Regularly monitor network traffic for any unusual or suspicious activity. This can help in early detection of potential exploitation attempts and allow for timely response.* | |
| | ***4. Implement Security Best Practices:** Ensure that your system follows general security best practices, such as disabling unnecessary services, using strong authentication mechanisms, and keeping all software up to date.* | |
| *By taking these precautions, you can significantly reduce the risk associated with CVE-2020-11868 and enhance the overall security of your system. If you need further assistance or more detailed guidance, feel free to ask!"* | | |
| Step 5: The Cloud Watcher Service System 104 (by the processing unit 202) filters the above recommendation as an actionable item to the user (i.e., the UE client 110 and/or the desktop client 112) as follows: | | |
| | | *1. Make sure that your organization has configured firewall rules to restrict access to trusted IP addresses only.* |
| | | *2. Keep monitoring your network traffic for any unusual or suspicious activity.* |
| Step 6: Another query to the Gen AI Model 208 from the processing unit 202 of the Cloud Watcher Service System 104: | | |
| | | *"There is an open source component Network Time Protocol project (NTP) version 4.2.8p13 and a vulnerability CVE-2020-11868 which has a environmental cvss score of 4.4 [CVSS:3.0*/*AV:N*/*AC:L*/*PR:N*/*UI:N*/*S:U*/*C:N*/*I:N*/*A:H*/*MAV:N*/*MAC:H*/*MPR:H*/*MUI:N*/*MS: U*/*MC:N*/*MI:N*/*MA:H]. As a cyber security architect what should I do to prevent this vulnerability from my application? which latest version of the component should I update?"* |
| | | Response received from the Gen AI Model 208 is as follows: |
| | | *"As a cybersecurity architect, addressing the CVE-2020-11868 vulnerability in the Network Time Protocol (NTP) version 4.2.8p13 involves several proactive steps to ensure your application remains secure. Here are some key actions you can take:* |
| | | *Firstly, **updating to the latest version** of NTP is crucial. This ensures that any security patches and fixes are applied, reducing the risk of exploitation. Regularly checking for updates and applying them promptly is a fundamental practice in maintaining security.* |
| | | *Secondly, **restricting network access** to the NTP service can significantly reduce the attack surface. Configuring firewall rules to allow access only from trusted IP addresses helps prevent unauthorized access. This step is essential in controlling who can interact with your NTP service.* |
| | | *Additionally, **monitoring network traffic** for unusual or suspicious activity is vital. Implementing intrusion detection systems (IDS) and regularly reviewing logs can help in early detection of potential exploitation attempts. This proactive monitoring allows for timely responses to any threats.* |
| | | *Implementing **security best practices** across your systems is also important. This includes disabling unnecessary services, using strong authentication mechanisms, and ensuring all software components are up to date. These practices help create a robust security posture that can withstand various threats.* |
| | | *The latest version of the Network Time Protocol (NTP) component you should update to is **4.2.8p15.*** |
| | | *This version includes important security updates and fixes that address vulnerabilities, including CVE-2020-11868.* |
| | | *Updating to this version will help mitigate the risks associated with the identified vulnerability and ensure your system is more secure. If you need further assistance with the update process or have any other questions, feel free to ask!"* |
| | | Step 7: The processing unit 202 of the Cloud Watcher Service System 104 filters the above recommendation as an actionable item for the product owner (i.e., the service provider 114) as follows: |
| | | *"Provide a patch update to the application using 'The latest version of the Network Time Protocol (NTP) component 4.2.8p15' ASAP.* " |

The above tables are provided merely for ease of understanding of the present disclosure and the same must not be seen as limitation. For instance, queries created above are subject to change based on the actual scenarios. The cloud watcher service system 104 may frame more complex queries based on the context of the application environment in more details to get appropriate responses.

In some embodiments, the processing unit 202 may provide a notification corresponding to at least one component from the set of components to an administrator account of the cloud environment 102 whose corresponding modified environmental score is greater than the predefined threshold. In some implementations, the notification may comprise an alert signal, a message or any other type of signal suitable as per implementation requirements. Now, the processing unit 202 may provide an input associated with the at least one component to the Gen AI model 208 when the corresponding category of the at least one component is the medium risk category or the high-risk category. As explained in the above paragraphs, the Gen AI model 208 may utilize the GPT-4 model to generate one or more recommendations, and a context aware response based on the one or more recommendations to be sent to UE Client 104-1 and/or the desktop client 112 and/or the service provider 114.

In an aspect, the input associated with the at least one component may comprise at least an identifier of the generic CVE information associated with the at least one component. In an aspect, the identifier of the generic CVE information may comprise numeric and/or alphanumeric string as the identifier. A non-limiting example of an identifier may be "CVE-2018-0786" which may be provided by the processing unit 202 to the Gen AI model 208. When the processing unit 202 provides the input associated with the at least one component, the Gen AI model 208 may generate at least one recommendation action for mitigating the security risk associated with the component belonging to the medium or the high security risk category.

In a non-limiting example, the Gen AI model 208 may generate the at least one recommendation action for mitigating the security risk associated with the component belonging to the medium or the high security risk category, similar to an example scenario depicted in the below table (Table 3):

**Table 3**

| |
|---|
| The processing unit 202 may provide an input associated with a component 'CVE-2018-0786'. |
| The Gen AI model 208 may generate the below recommendation(s): |
| *"CVE-2018-0786 is a security feature bypass vulnerability affecting Microsoft .NET Framework versions 2.0 SP2, 3.0 SP2, 3.5, 3.5.1, 4.5.2, 4.6, 4.6.1, 4.6.2, 4.7, 4.7.1, as well as .NET Core versions 1.0 and 2.0, and PowerShell Core 6.0.0.* |
| *This vulnerability arises because these components do not fully validate certificates. An attacker could exploit this by presenting a certificate that is marked invalid for a specific use, but the component could still use it, disregarding the Enhanced Key Usage taggings.* |
| *The vulnerability can be mitigated by ensuring that .NET Framework and .NET Core components perform complete validation of certificates. Microsoft addressed this issue by releasing security updates that help ensure proper certificate validation.* |
| *For further details and updates, you can refer to the official CVE database entries and security advisories provided by Microsoft and other security resources. "* |

Now, when the Gen AI model 208 generates the above recommendations (as mentioned in the Table 1), the recommendation may be filtered to determine which recommendation may be relevant to users (the UE client 110 and/or the desktop client 112) and which recommendation may be relevant to the service provider 114 e.g., engineering team, etc. Continuing the example mentioned in the Table 1, the system 104 mat transmit a recommendation, for example, *"Check validity of the certificates"* to the UE client 110 and/or the desktop client 112. Further, the system 104 may transmit another recommendation, for example, *"Upgrade the .NET component to the next available version"* to the service provider 114.

Further, the processing unit 202 may providing a recommendation message in the notification to the administrator account (for example, the UE client 110 and/or the desktop client 112 and/or the service provider 114). In an aspect, the recommendation message comprises information about the recommendation action for mitigating the security risk associated with the at least one component.

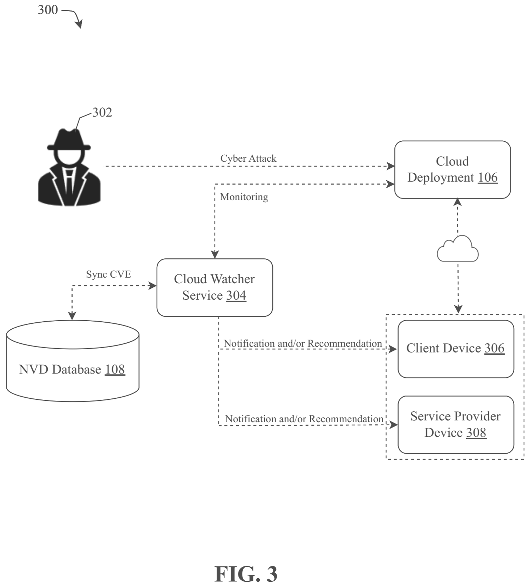

**FIG. 3** illustrates a schematic diagram depicting an example use case 300 of managing security risks associated with cloud application deployment 106 in the cloud environment 102, according to one or more embodiments of the present disclosure. The use case 300 depicts an attacker 302 who is attempting to intrude/attack one or more components of the cloud deployment 106. The user case 300 further depicts that a Cloud watcher service 304 (CWS) is monitoring the cloud deployment 106 continuously for any potential exposure and/or security risk for each of the components of the cloud deployment 106. The CWS 304 is similar to the cloud watcher service system 104 explained in the above paragraphs. Further, the CWS 304 is connected to synchronize with the NVD database 108 which is an external database.

Further, the CWS 304 performs continuous monitoring of the cloud deployment 106 and generates notifications and/or recommendations to mitigate security risk posed by the attacker 302. The generated notifications and/or recommendations are transmitted to suitable recipients such as the client device 306 and the service provider device 308. In an example, the attacker 302 may initiate any type of cyber-attack such denial-of service, phishing attack, ransom attack, etc., on one or more components deployed in the cloud deployment 106. The purpose of CWS 304 is to avert and mitigate this type of security risk posed by the attacker 302. To achieve this, the CWS 304 may obtain generic CVE information of the each of the component which is deployed in the cloud deployment 106 from the NVD database 108.

When the CWS 304 obtains the generic CVE information of a component deployed in the cloud deployment 106, it filters out the CVE details. The CWS 304 may filter base score, vector, etc from the obtained CVE information from the NVD database 108. Now, the CWS 304 may calculate the modified environmental score of the component for which the generic CVE information has been obtained. For example, the CWS 304 may determine the modified environmental score of the component and based on the score it may classify the component as one of: a low risk category, a medium risk category and a high risk category.

In case the CWS 304 determines that the component belongs to the low risk category, it may discard the component from further processing that means the component does not require any security mitigation recommendation and is less risky. However, when the CWS 304 determines that the component belongs to the medium or high risk category, the CWS 304 may send the one or more queries to the Gen AI Model 208 to get recommendation and will send notifications to the client device 306 and the service provider device 308 considering the impact is medium or high.

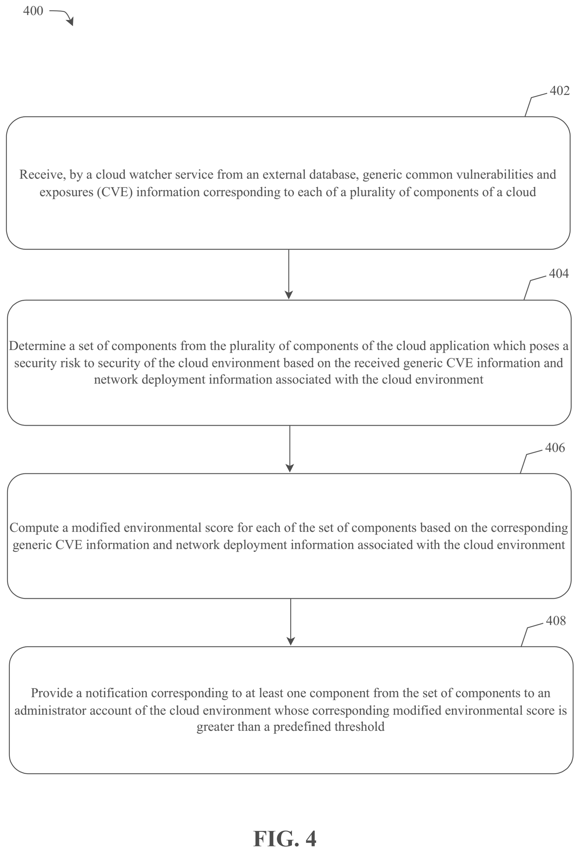

**FIG. 4** illustrates a flowchart of a method 400 of managing security risks associated with cloud application deployments in the cloud environment 102, according to one or more embodiments of the present disclosure. The steps of the method 400, described in connection with the embodiments disclosed herein, may be embodied directly in hardware, in firmware, in a software module executed by the processing unit 202 along with other components of the system 104, in any practical combination thereof.

At step 402, the method 400 may receive, by the cloud watcher service 304 from an external database 110, generic common vulnerabilities and exposures (CVE) information corresponding to each of a plurality of components of a cloud (the cloud deployment 106). In an aspect, the method 400 may obtain vector information associated with the component from the generic CVE information associated with the component. Further, the method 400 may determine whether the component can impact the security of the cloud environment based on the vector information and the network deployment configuration. Further, the method 400 may classify the component in the set of components when it is determined that the component can impact the security of the cloud environment. Further, the method 400 may discard the component when it is determined that the component cannot impact the security of the cloud environment.

At step 404, the method 400 may determine a set of components from the plurality of components of the cloud application which poses a security risk to security of the cloud environment based on the received generic CVE information and network deployment information associated with the cloud environment.

At step 406, the method 400 may compute a modified environmental score for each of the set of components based on the corresponding generic CVE information and network deployment information associated with the cloud environment. In an aspect, for each of the components of the set of components, the method 400 may obtain vector information associated with the component from the generic CVE information associated with the component. Further, the method 400 may update one or more metric values in the vector information associated with the component based on the network deployment information. Further, the method 400 may calculate the modified environmental score for the component based on the updated one or more metric values.

At step 408, the method 400 may provide a notification corresponding to at least one component from the set of components to an administrator account of the cloud environment whose corresponding modified environmental score is greater than a predefined threshold.

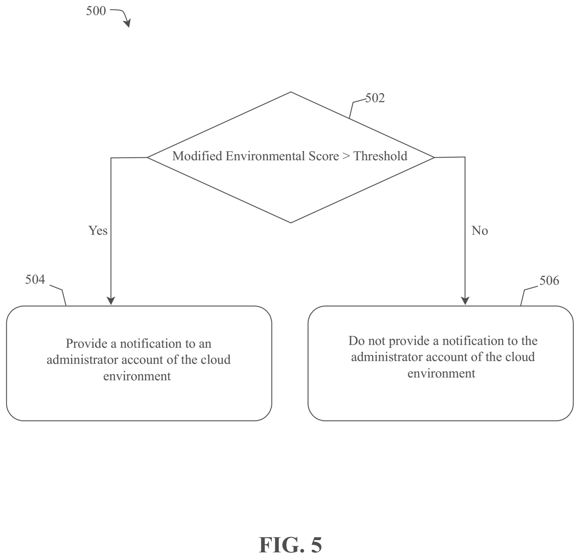

**FIG. 5** illustrates a flowchart of a method 500 of providing a notification based on a modified environmental score, according to one or more embodiments of the present disclosure. The steps of the method 500, described in connection with the embodiments disclosed herein, may be embodied directly in hardware, in a software module executed by the processing unit 202 along with other components of the system 104, in any practical combination thereof.

At step 502, the method 500 may determine whether a modified environmental score is greater than a predefined threshold. In an aspect, the predefined threshold may be preconfigured in the system 104 which may indicate that the components having the modified environmental score below the predefined threshold value may be ascertained as a low security risk category. Further, the components having the modified environmental score above the predefined threshold value may be ascertained as a medium or a high security risk category. In the above non-limiting example, the modified environment score of '4' may be preconfigured as the predefined threshold value. However, the system 104 may be further configured to determine the components belonging to the medium and the high security risk category, as explained in the above example.

At step 504, the method 500 may provide a notification corresponding to at least one component from the set of components to an administrator account of the cloud environment whose corresponding modified environmental score is greater than the predefined threshold.

At step 506, the method 500 may refrain from providing any notification to the administrator account of the cloud environment whose corresponding modified environmental score is below the predefined threshold. In an aspect, the system 104 may discard the component when the corresponding category of the component is ascertained to be a low risk category i.e., whose corresponding modified environmental score is below the predefined threshold. In a non-limiting example, if the component has a score of 3.5 (out of 10), then the system 104 may determine that the components is a low risk category and may discard the component from further processing. For a low risk category component, the processing module need not perform any other process and may tag the component as a low risk category so that the user and/or the service provider 114 is aware of its security risk category.

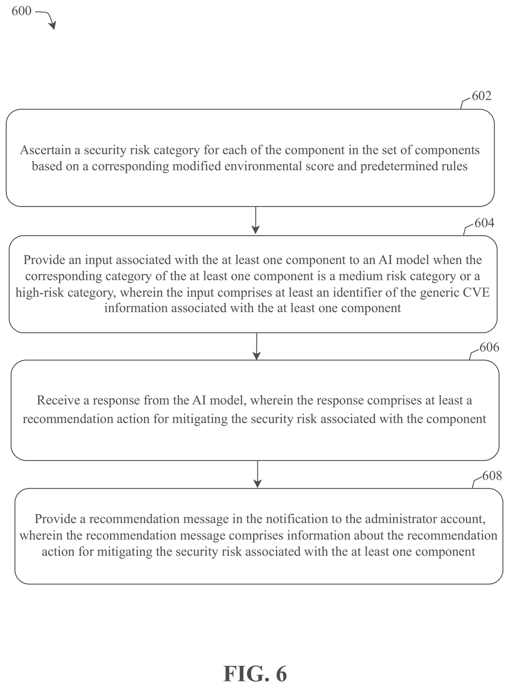

**FIG. 6** illustrates a flowchart of a method 600 of generating a recommendation message based on an Artificial Intelligence (AI) model, according to one or more embodiments of the present disclosure. The steps of the method 600, described in connection with the embodiments disclosed herein, may be embodied directly in hardware, in firmware, in a software module executed by the processing unit 202 or the Gen AI model 208 along with other components of the system 104, in any practical combination thereof.

At step 602, the method 600 may ascertain, a security risk category for each of the component in the set of components based on the corresponding modified environmental score and predetermined rules, wherein the security risk category is one of a low-risk category, a medium risk category, and a high-risk category.

At step 604, the method 600 may provide an input associated with the at least one component to an AI model when the corresponding category of the at least one component is the medium risk category or the high-risk category, wherein the input comprises at least an identifier of the generic CVE information associated with the at least one component.

At step 606, the method 600 may receive a response from the AI model (i.e., the Gen AI model 208), wherein the response comprises at least a recommendation action for mitigating the security risk associated with the component.

At step 608, the method 600 may provide a recommendation message in the notification to the administrator account, wherein the recommendation message comprises information about the recommendation action for mitigating the security risk associated with the at least one component.

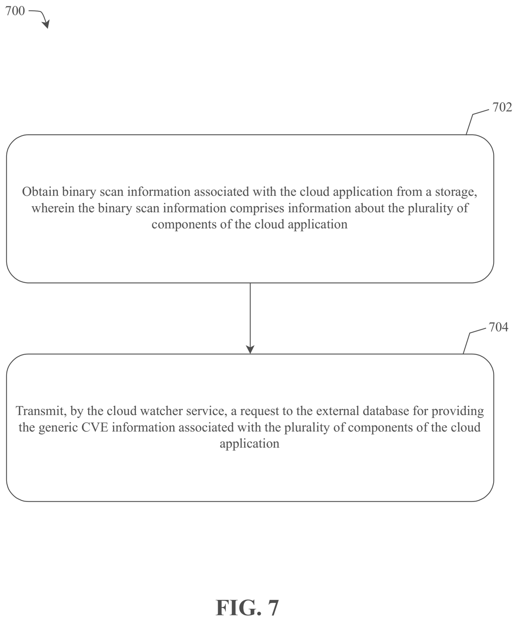

**FIG. 7** illustrates a flowchart of a method 700 of fetching generic CVE information associated with a plurality of components of a cloud application, according to one or more embodiments of the present disclosure. The steps of the method 700, described in connection with the embodiments disclosed herein, may be embodied directly in hardware, in firmware, in a software module executed by the processing unit 202 along with other components of the system 104, in any practical combination thereof.

At step 702, the method 700 may obtain binary scan information associated with the cloud application from a storage, wherein the binary scan information comprises information about the plurality of components of the cloud application.

At step 704, the method 700 may transmit, by the cloud watcher service 304, a request to the external database 110 for providing the generic CVE information associated with the plurality of components of the cloud application, wherein the external database comprises the generic CVE information corresponding to the plurality of components of the cloud application.

The systems and methods described above provide an efficient solution to that at runtime, users will be notified for any quick action to be taken to avoid immediate cyber-attack. Further, the users will be felt secure for their cloud application. Also, the users may be able to perform prevention actions to protect themselves from immediate vulnerabilities. Further, the users may save potential financial loss and reduce operational cost.

The subject matter may be described herein in terms of functional and/or logical block components, and with reference to symbolic representations of operations, processing tasks, and functions that may be performed by various computing components or devices. It should be appreciated that the various block components shown in the figures may be realized by any number of hardware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

Furthermore, embodiments of the subject matter described herein can be stored on, encoded on, or otherwise embodied by any suitable non-transitory computer-readable medium as computer-executable instructions or data stored thereon that, when executed (e.g., by a processing system), facilitate the processes described above. The term "computer readable medium" may include any medium that is capable of storing, encoding, or carrying instructions for execution by the system 102 and that cause the system 102 to perform any one or more of the techniques of the present disclosure, or that is capable of storing, encoding or carrying data structures used by or associated with such instructions. Non-limiting computer readable medium examples may include solid-state memories, and optical and magnetic media. In an example, a massed computer readable medium comprises a computer readable medium with a plurality of particles having invariant (e.g., rest) mass. Accordingly, massed computer-readable media are not transitory propagating signals. Specific examples of massed machine readable media may include: non-volatile memory, such as semiconductor memory devices (e.g., Electrically Programmable Read-Only Memory (EPROM). Electrically Erasable Programmable Read-Only Memory (EEPROM)) and flash memory devices; magnetic disks, such as internal hard disks and removable disks; magneto-optical disks; and CD-ROM and DVD-ROM disks.

The connecting lines shown in the various figures contained herein are intended to represent exemplary functional relationships and/or physical couplings between the various elements. It should be noted that many alternative or additional functional relationships or physical connections may be present in an embodiment of the subject matter.

The foregoing description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements directly connected to one another, additional intervening elements, devices, features, or components may be present in an embodiment of the depicted subject matter. In addition, certain terminology may also be used herein for the purpose of reference only, and thus are not intended to be limiting.

The foregoing detailed description is merely exemplary in nature and is not intended to limit the subject matter of the application and uses thereof. Furthermore, there is no intention to be bound by any theory presented in the preceding background, brief summary, or the detailed description.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment of the subject matter. It should be understood that various changes may be made in the function and arrangement of elements described in an exemplary embodiment without departing from the scope of the subject matter as set forth in the appended claims. Accordingly, details of the exemplary embodiments or other limitations described above should not be read into the claims absent a clear intention to the contrary.

## Claims

1. A method of managing security risks associated with cloud application deployments in a cloud environment, wherein the method comprises:
receiving, by a cloud watcher service from an external database, generic common vulnerabilities and exposures (CVE) information corresponding to each of a plurality of components of a cloud;
determining a set of components from the plurality of components of the cloud application which poses a security risk to security of the cloud environment based on the received generic CVE information and network deployment information associated with the cloud environment;
computing a modified environmental score for each of the set of components based on the corresponding generic CVE information and network deployment information associated with the cloud environment;
providing a notification corresponding to at least one component from the set of components to an administrator account of the cloud environment whose corresponding modified environmental score is greater than a predefined threshold.

2. The method as claimed in claim 1, wherein the determining further comprises:
for each of the plurality of components of the cloud application:
obtaining vector information associated with the component from the generic CVE information associated with the component;
determining whether the component can impact the security of the cloud environment based on the vector information and the network deployment configuration;
classifying the component in the set of components when it is determined that the component can impact the security of the cloud environment; and
discarding the component when it is determined that the component cannot impact the security of the cloud environment.

3. The method as claimed in claim 1, wherein the computing further comprises:
for each of the components in the set of components:
obtaining vector information associated with the component from the generic CVE information associated with the component;
updating one or more metric values in the vector information associated with the component based on the network deployment information; and
calculating the modified environmental score for the component based on the updated one or more metric values.

4. The method as claimed in claim 1, wherein the method further comprises ascertaining, a security risk category for each of the component in the set of components based on the corresponding modified environmental score and predetermined rules, wherein the security risk category is one of a low-risk category, a medium risk category, and a high-risk category.

5. The method as claimed in claim 4, wherein the method further comprises:
providing an input associated with the at least one component to an AI model when the corresponding category of the at least one component is the medium risk category or the high-risk category, wherein the input comprises at least an identifier of the generic CVE information associated with the at least one component;
receiving a response from the AI model, wherein the response comprises at least a recommendation action for mitigating the security risk associated with the component; and
providing a recommendation message in the notification to the administrator account, wherein the recommendation message comprises information about the recommendation action for mitigating the security risk associated with the at least one component.

6. The method as claimed in claim 4, wherein the method further comprises discarding the component when the corresponding category of the component is ascertained to be low risk category.

7. The method as claimed in claim 1, wherein the method further comprises:
obtaining binary scan information associated with the cloud application from a storage, wherein the binary scan information comprises information about the plurality of components of the cloud application; and
transmitting, by the cloud watcher service, a request to the external database for providing the generic CVE information associated with the plurality of components of the cloud application, wherein the external database comprises the generic CVE information corresponding to the plurality of components of the cloud application.

8. A system for managing security risks associated with cloud application deployments in a cloud environment, the system comprising:
a storage; and
at least one processor coupled to the storage, the at least one processor configured to:
receive, from an external database, generic common vulnerabilities and exposures (CVE) information corresponding to each of a plurality of components of a cloud;
determine a set of components from the plurality of components of the cloud application which poses a security risk to security of the cloud environment based on the received generic CVE information and network deployment information associated with the cloud environment;
compute a modified environmental score for each of the set of components based on the corresponding generic CVE information and network deployment information associated with the cloud environment; and
provide a notification corresponding to at least one component from the set of components to an administrator account of the cloud environment whose corresponding modified environmental score is greater than a predefined threshold.

9. The system of claim 8, wherein the at least one processor is configured to:
for each of the plurality of components of the cloud application:
obtain vector information associated with the component from the generic CVE information associated with the component;
determine whether the component can impact the security of the cloud environment based on the vector information and the network deployment configuration;
classify the component in the set of components when it is determined that the component can impact the security of the cloud environment; and
discard the component when it is determined that the component cannot impact the security of the cloud environment.

10. The system of claim 8, wherein the at least one processor configured to:
for each of the components in the set of components:
obtain vector information associated with the component from the generic CVE information associated with the component;
update one or more metric values in the vector information associated with the component based on the network deployment information; and
calculate the modified environmental score for the component based on the updated one or more metric values.

11. The system of claim 8, wherein the at least one processor is configured to ascertain, a security risk category for each of the component in the set of components based on the corresponding modified environmental score and predetermined rules, wherein the security risk category is one of a low-risk category, a medium risk category, and a high-risk category.

12. The system of claim 11, wherein the at least one processor is configured to:
provide an input associated with the at least one component to an AI model when the corresponding category of the at least one component is the medium risk category or the high-risk category, wherein the input comprises at least an identifier of the generic CVE information associated with the at least one component;
receive a response from the AI model, wherein the response comprises at least a recommendation action for mitigating the security risk associated with the component; and
provide a recommendation message in the notification to the administrator account, wherein the recommendation message comprises information about the recommendation action for mitigating the security risk associated with the at least one component.

13. The system of claim 11, wherein the at least one processor is configured to discard the component when the corresponding category of the component is ascertained to be low risk category.

14. The system of claim 8, wherein the at least one processor is configured to:
obtain binary scan information associated with the cloud application from a storage, wherein the binary scan information comprises information about the plurality of components of the cloud application; and
transmit, a request to the external database for providing the generic CVE information associated with the plurality of components of the cloud application, wherein the external database comprises the generic CVE information corresponding to the plurality of components of the cloud application.

15. A computer-readable medium having computer-executable instructions stored thereon that, when executed by a processor, cause the processor to:
receive, from an external database, generic common vulnerabilities and exposures (CVE) information corresponding to each of a plurality of components of a cloud;
determine a set of components from the plurality of components of the cloud application which poses a security risk to security of the cloud environment based on the received generic CVE information and network deployment information associated with the cloud environment;
compute a modified environmental score for each of the set of components based on the corresponding generic CVE information and network deployment information associated with the cloud environment; and
provide a notification corresponding to at least one component from the set of components to an administrator account of the cloud environment whose corresponding modified environmental score is greater than a predefined threshold.
